# FASCICULE DE BREVET EUROPEEN

(11) **EP 1 238 601 B1**
(45) Date de publication et mention de la délivrance du brevet: **24.11.2004**
(21) Numéro de dépôt: 01200895.9
(22) Date de dépôt: 09.03.2001
(51) Int. Cl.: A45C 5/12, G06F 1/16

(54) **Attaché-case particulièrement adapté pour transporter un ordinateur portable et ses accessoires**
Koffer geeignet zum Transport eines Computers und Zubehör
Suitcase particularly adapted to carry a computer and its accessories

(43) Date de publication de la demande: 11.09.2002
(73) Titulaire: Orlan Holding S.A., 2086 Luxembourg (LU)
(72) Inventeur: Remakel, Fernand, 1522 Luxembourg (LU)
(74) Mandataire: Waxweiler, Jean

(56) Documents cités:
- EP-A- 0 768 596
- EP-A- 0 837 384
- DE-U- 9 304 933
- DE-U- 29 821 711
- US-A- 4 929 948

## Description

L'invention concerne une mallette, ou attaché-case, particulièrement adapté pour transporter un ordinateur portable et ses accessoires.

Un tel dispositif est connu par le document DE-9 304 933.1-U.

Ces dernières années, il est évident que les ordinateurs portables sont de plus en plus répandus comme instrument de travail par des utilisateurs d'univers différents, et ce du fait de leur grande practicité et de leur minimum d'encombrement. Il va également de soi que ces mêmes ordinateurs doivent, pour développer pleinement leurs fonctions, être accompagnés d'instruments tels que les câbles, la batterie et sa recharge, et enfin une imprimante.

Ainsi, parallèlement au développement des ordinateurs portables, des attaché-case spécialement adaptés à leurs transports furent conçus, en se basant essentiellement sur des modèles de mallettes normales de travail. Ces attaché-case permettent de transporter un portable d'une manière pratique tout en le protégeant au maximum des chocs accidentels. Elles sont en général munies d'une bandoulière et de poches ou espaces internes pour les emplacements des câbles et de la batterie.

Si un utilisateur se sert de ce genre de mallette, il doit d'abord en extraire le portable et trouver un endroit pour le poser, sortir tous les câbles pour se connecter et enfin avoir une place pour déposer son attaché-case vide. Ceci peut parfois être long et ennuyeux, voire parfois difficile.

En effet il vous suffit de penser aux problèmes qui se créent en train, en avion ou encore en voiture pour illustrer ce propos. D'ailleurs ce désagrément est amplifié pour le cas d'un représentant, qui lors d'une visite chez un client ou un fournisseur, doit extraire son portable puis s'appuyer quelque part, et poser son sac à terre avant de pouvoir enfin enregistrer les instructions de son interlocuteur.

Le but de l'invention et de fournir une mallette particulièrement adapté pour transporter un ordinateur portable et ses accessoires, qui laisse envisager la fin de tous ces inconvénients.

Ce but est réalisé par une mallette comprenant un support rigide à insérer dans la valise pourvue de fixations de la part et d'autre; deux glissières intégrées sur ce support pour mettre le portable; un étage pourvu de fermetures velcro destinées à fixer l'ordinateur sur le support supérieur; deux renforts permettant d'installer un renforcement surélevé à dimensions plus réduites pour fixer une imprimante; et des câbles pour relier rapidement le portable au réseau externe.

Des modes de réalisation avantageux sont décrits dans les sous revendications.

Tout d'abord la mallette intègre un support rigide à l'intérieur sur lequel sont attachées solidement deux lanières; avec des barrettes coulissantes qui permettent de poser l'ordinateur. Cette partie est conçue de manière coulissante vers l'extérieur car de fait le portable sera sorti partiellement et en même temps que son poste d'appui lors de l'ouverture de l'attaché-case.

Il est également prévu, toujours à l'intérieur, un emplacement pour attacher et poser une imprimante portable prête à fonctionner. Des prises prédisposées à l'intérieur au moyen de divers câbles rendront possible l'alimentation électrique du portable, ainsi que sa connexion vers des lignes téléphoniques fixes (ou portables) pour se relier à un modem ou à des imprimantes externes.

Enfin, la mallette possède de nombreux espaces et compartiment de rangements où l'on peut mettre des feuilles et autres accessoires utiles, à l'instar d'une seule bandoulière ou autres moyens classiques pour le transport.

Cette présentation sommaire jusqu'à présent vous permettre de mieux comprendre la description technique qui suit d'un cas concret (mais non exhaustif) de la mallette. Ainsi, dans les dessins annexés:

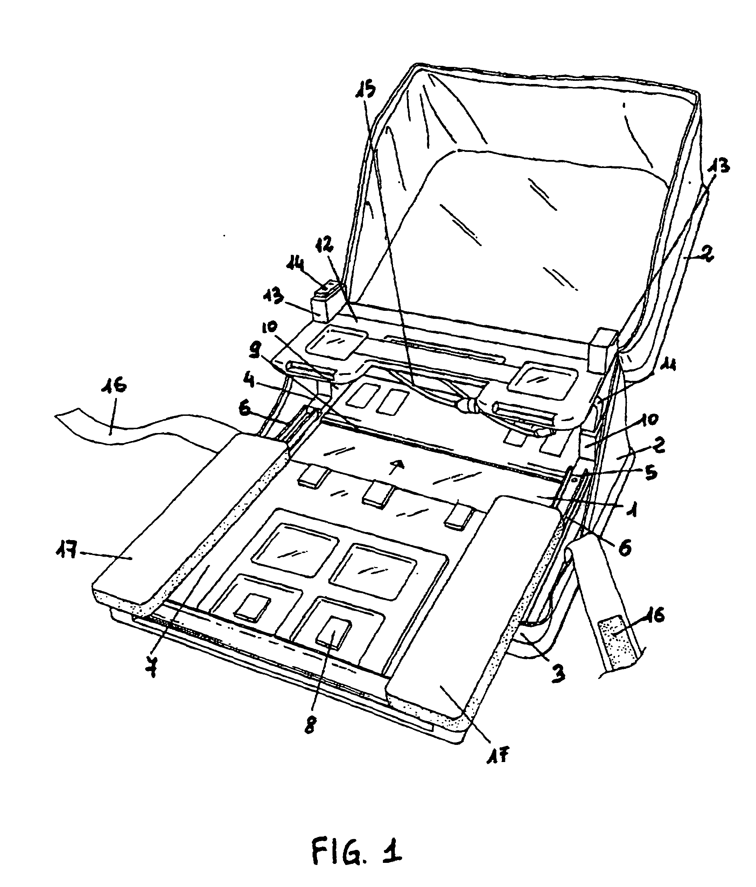

La figure 1 offre une perspective axonométrique de l'attaché-case avec le plan en position de travail.
La figure 2 offre une perspective axonométrique avec une variante de la figure 1.
La figure 3 nous montre la valise avec l'imprimante prête à l'emploi.
La figure 4 offre une autre position par rapport aux figures 2 et 3, avec le plan de travail en retrait et le panneau antérieur ouvert.

En se référant à ces figures, nous constatons que l'invention est composée d'une structure rigide (réf. 1) contenue et ensemble avec une mallette (réf. 2) en forme de parallélépipède avec une ouverture (réf. 3) qui du reste est haute dans sa partie postérieure et beaucoup plus basse sur la partie antérieure.

La structure rigide (réf. 1) est composée d'une base de dimension légèrement inférieure aux flans de la mallette de manière à pouvoir y encastrer l'ordinateur portable. Sur les côtés droits et gauches de ce socle se trouvent deux rivets (réf. 4 et 5) de quelques centimètres de hauteur, auxquelles sont attachées les deux barrettes en métal coulissantes (réf. 6). La partie supérieure de la valise se présente comme une étagère (réf. 7) qui permet d'installer l'ordinateur de manière amovible aux moyens de fermetures velcro (réf. 8). La barre transversale (réf. 9), posée perpendiculairement aux deux rivets et aussi sur l'extrémité des deux barrettes coulissantes (côté interne de la mallette), constitue l'élément ultime rattachant le socle à la partie supérieure de la mallette.

Les rivets (réf. 4 et 5) possèdent un rehaussement (réf. 10) situé vers l'intérieur sur lequel est posé un petit socle (réf. 11) en partie profilé en L. Ce socle permet d'installer un nouvel étage (réf. 12) pour y poser une petite imprimante installée au moyen de fermetures velcro. Cet étage où est appuyé et fixé l'imprimante (réf. 12) offre des renfoncements postérieurs (réf. 13) permettant à la fois de protéger et contenir l'imprimante, mais servant aussi d'emplacement pour la (les) prise(s) de connexion du portable avec le réseau électrique ou autre (réf. 15).

Comme vous pouvez mieux le voir dans les schémas annexés, le portable qui est attaché sur l'étage (réf. 7) peut glisser et être extrait de l'attaché-case très facilement (réf. 2). Ainsi, l'ordinateur peut être ouvert et utilisé sans être enlevé de la mallette tout en bénéficiant du socle rigide comme base d'appui. En même temps, le lien avec l'imprimante est toujours activé. Il est de plus très facile et rapide de se connecter à l'alimentation externe ou aux autres accessoires grâce aux prises (réf. 14) prévues dans les renfoncements. Enfin, une sangle (réf. 16) latérale permet de fixer solidement l'ordinateur durant le transport.

La mallette une fois fermée peut facilement être transportée grâce à la poignée et à la sangle comme déjà mentionné ci-dessus. Il y a également des poches sur la partie extérieure de la valise permettant de ranger par exemple des feuilles, blocs ou similaires. De plus, pour pouvoir utiliser l'attaché-case avec un portable de n'importe quelle dimension, nous avons prévu des plages amovibles (réf. 17). Ces plages sont fixables sur l'étage au moyen de fermetures velcro par exemple, ce qui permet de modifier la superficie de l'étage ainsi que sa hauteur.

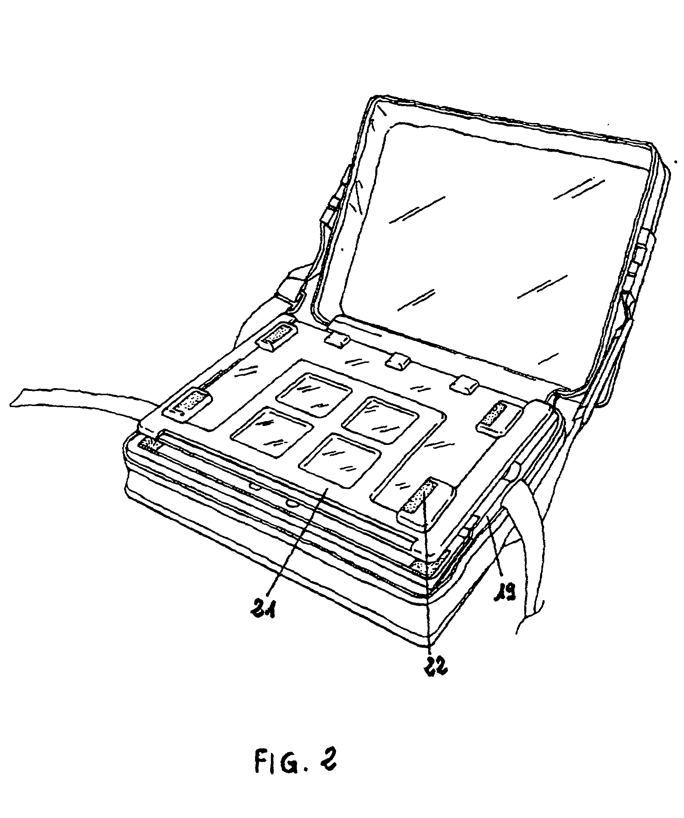

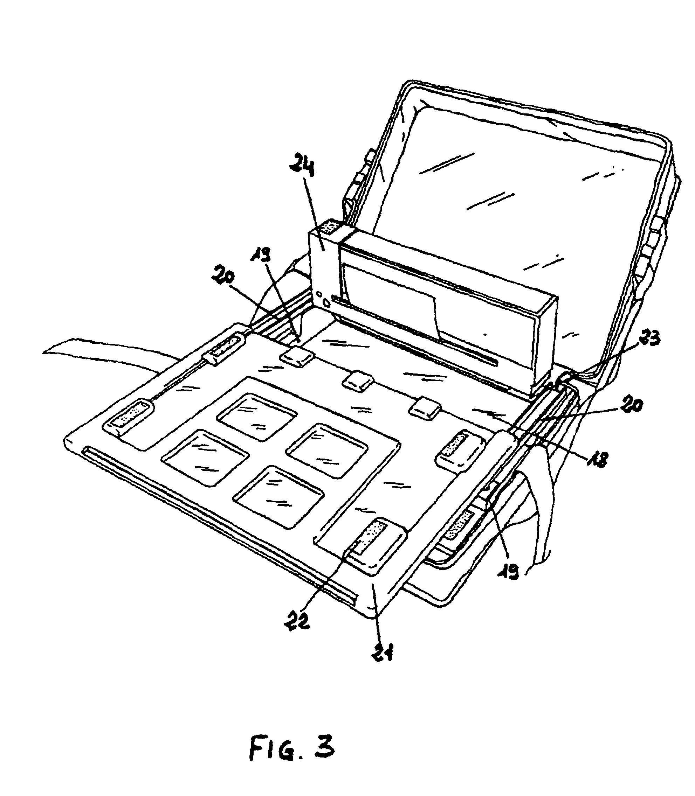

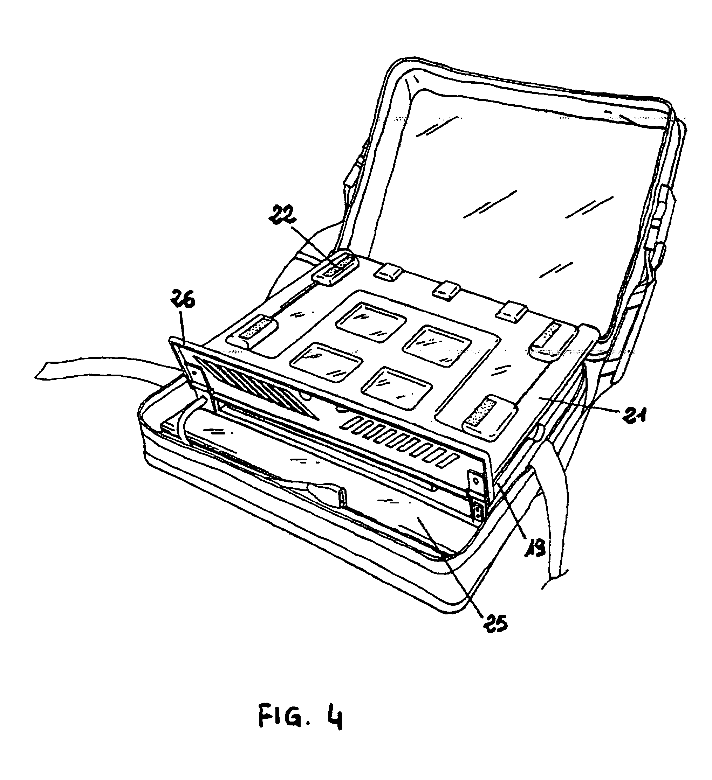

Les figures 2, 3 et 4 montrent différentes solutions d'utilisations, sur lesquelles la structure rigide est formée d'une base (réf. 18) délimitée latéralement pour les ¾ de sa longueur par deux rehaussements (réf. 19). Ceux-ci sont rattachés à la partie inférieure par deux glissières (réf. 20), tandis que la partie supérieure est, elle rattachée à l'étage (réf. 21) où on peut fixer le portable par des fermetures velcro (réf. 22) ou autres solutions similaires permettant de profiter des avantages décrits ci-dessus.

Il existe sous la partie amovible (réf. 21) un espace qui constitue un support rangé vers l'intérieur de la mallette. Cet espace est composé d'une plaque rectangulaire transversale fixée à droite et à gauche par deux taquets renforcés de crochets qui dans leurs parties supérieures se profilent en demi-cercle formant ainsi une plaque vide. Le dessin de tous les crochets a globalement 1 forme d'un foret pour clé, sur lequel est soudé un support profilé en L (réf. 23). Ce support possède des fermetures velcro qui tiendront alors la petite imprimante (réf. 24).

Quand le support est tiré vers le haut, ses extrémités se trouvent au niveau des crochets (dans la partie en forme de demi-cercle), ce qui permettra d'effectuer un angle de rotation à 45° afin de poser l'imprimante (réf. 24) à la verticale. Il faut alors pousser l'imprimante vers le bas si l'on veut la maintenir en position fixe: les extrémités du plateau viennent alors d'encastrer dans la partie inférieure des crochets. Pour remettre l'imprimante sous la partie amovible, il suffit (en partant de la position précédente) de la tirer vers le haut en débloquant ainsi les fixations puis de la faire tourner à 45° pour qu'elle soit à l'horizontale.

Enfin, un autre emplacement (réf. 25) est prévu toujours en dessous de la partie amovible de l'attaché-case (réf. 21), mais cette fois sur la partie antérieure. Cet espace est accessible en faisant basculer l'étage vers l'arrière de la mallette. Il est de plus protégé par une petite porte (réf. 26) maintenue sur les côtés par des crochets fixés sur base rigide de la valise.

En dernier lieu, la mallette est dotée de câbles pour la connexion rapide de l'ordinateur à l'électricité ainsi qu'aux autres réseaux. Il y a également toute une série de petites pochettes externes pour des papiers ou autres objets utiles.

## Revendications

1. Mallette, particulièrement adaptée pour contenir un ordinateur portable et ses accessoires, comprenant un support (1) rigide et mobile inséré dans la mallette (2) pourvu de fixations (4,5) de part et d'autre; **caractérisée par** deux glissières (6) intégrées sur ce support; une étagère (7) pour y mettre l'ordinateur portable mobile sur les glissières (4) et pourvue de fermetures velcro (8) destinées à fixer l'ordinateur portable sur l'étagère (7); deux renforts (10,11) situés en prolongation des glissières (6) soutenant un renforcement (12) surélevé aux dimensions plus réduites pour recevoir et fixer une imprimante (24); et des câbles (15) pour relier rapidement l'ordinateur portable au réseau externe électrique ou autre.

2. Mallette selon la revendication 1, dans laquelle les deux glissières (6) intégrées sur ce support permettent de faire glisser l'ordinateur portable vers l'intérieur et l'extérieur de la mallette.

3. Mallette selon la revendication 2, dans laquelle une barre transversale (9) entre les deux glissières (6) qui fait revenir le PC vers l'intérieur de la mallette au bon moment lorsque ce dernier glisse de l'avant en arrière.

4. Mallette selon la revendication 3, comprenant des bordures latérales (19) qui assurent une bonne assise latérale de l'imprimante.

5. Mallette selon la revendication 4, dans laquelle est prévue la possibilité d'encastrer sur les bordures latérales (19) à l'imprimante les prises de courant et de connexion au réseau.

6. Mallette selon la revendication 5, comprenant un espace réduit au minimum entre le support rigide interne (1) et la partie externe de la mallette lors de l'ouverture de cette dernière.

7. Malette selon la revendication 6, comprenant un support rigide (1) formé par une base fixe sur les ¾ de sa longueur grâce à deux crochets (19) tandis que l'étagère (7) tient avec des fermetures velcro.

8. Mallette selon la revendication 7, comprenant un espace vide intégré sous le plan mobile (21) sur lequel est fixé un support transversal terminant à ses extrémités en arc de cercle, permettant à l'imprimante (24) d'être mise soit en position d'arrêt à l'horizontale, soit en position de fonctionnement à la verticale, les deux alternatives donnant dans tous les cas une position stable à ladite imprimante (24).

9. Mallette selon la revendication 8, pourvue d'un espace de rangement (25) protégé par une grille à l'avant (26) espace (25) accessible en faisant glisser l'ordinateur portable vers l'arrière.

## Patentansprüche

1. Koffer, insbesondere geeignet zum Aufnehmen eines Laptop und seines Zubehörs, der einen starren und beweglichen Träger (1) umfasst, der in den Koffer (2) eingefügt ist, versehen mit Befestigungen (4, 5) zu beiden Seiten, **gekennzeichnet durch** zwei Gleitschienen (6), die auf diesem Träger eingebaut sind, ein Regal (7), um dort den auf den Gleitschienen (4) beweglichen Laptop anzubringen und versehen mit Klettverschlüssen (8), die dazu bestimmt sind, den Laptop auf dem Regal (7) zu befestigen, zwei Verstärkungen (10, 11), die in Verlängerung der Gleitschienen (6) liegen und eine überhöhte Verstärkung (12) stützen, die kleinere Maße hat, um einen Drucker (24) aufzunehmen und zu befestigen, und Kabel (15), um den Laptop schnell mit dem externen elektrischen oder anderen Netz zu verbinden.

2. Koffer nach Anspruch 1, bei dem die zwei Gleitschienen (6), die auf diesem Träger eingebaut sind, es erlauben, den Laptop zum Inneren und Äußeren des Koffers zu schieben.

3. Koffer nach Anspruch 2, bei dem eine Querstange (9) zwischen den zwei Gleitschienen (6) den PC in das Innere des Koffers im richtigen Augenblick zurückkehren lässt, wenn Letzterer von vorn nach hinten gleitet.

4. Koffer nach Anspruch 3, der seitliche Ränder (19) umfasst, die ein gutes seitliches Sitzen des Druckers sicherstellen.

5. Koffer nach Anspruch 4, bei dem die Möglichkeit vorgesehen ist, auf den seitlichen Rändern (19) zum Drucker die Strom- und Netzanschlüsse einzulassen.

6. Koffer nach Anspruch 5, der einen auf das Minimum reduzierten Raum zwischen dem starren inneren Träger (1) und dem äußeren Teil des Koffers beim Öffnen dieses Letzteren umfasst.

7. Koffer nach Anspruch 6, der einen starren Träger (1) umfasst, der aus einer Basis gebildet ist, die auf den ¾ ihrer Länge dank zweier Haken (19) stationär ist, während das Regal (7) mit Klettverschlüssen hält.

8. Koffer nach Anspruch 7, der einen Leerraum unter der beweglichen Arbeitsfläche (21) eingebaut umfasst, auf dem ein Querträger befestigt ist, der an seinen Enden im Kreisbogen endet, der es dem Drucker (24) erlaubt, entweder in horizontale Feststellstellung oder in Betriebsstellung senkrecht gebracht zu werden, wobei die zwei Alternativen in allen Fällen eine stabile Stellung für den Drucker (24) ergeben.

9. Koffer nach Anspruch 8, versehen mit einem Verstauraum (25), der auf der Vorderseite (26) durch ein Gitter geschützt ist, wobei der Raum (25) zugänglich ist, indem man den Laptop nach hinten schiebt.

## Claims

1. A briefcase, particularly adapted to contain a portable computer and its accessories, comprising a rigid and mobile support (1) inserted in the briefcase (2) equipped with fixations (4, 5) on both sides; **characterized by** two slides (6) integrated on this support; a shelf (7) for placing the mobile portable computer on the slides (4) and equipped with Velcro fasteners (8) designed to fix the portable computer on the shelf (7); two strengthening pieces (10, 11) situated on extension of the slides (6) supporting an elevated reinforcement (12) to the smaller dimensions to receive and fix a printer (24); and cables (15) to quickly connect the portable computer to the external electrical or other system.

2. The briefcase according to claim 1, in which the two slides (6) integrated on this support allow the portable computer to slide toward the inside and the outside of the briefcase.

3. The briefcase according to claim 2, in which a cross bar (9) between the two slides (6) which makes the PC go back to the inside of the briefcase at the right time when the latter slides from front to back.

4. The briefcase according to claim 3, comprising lateral edges (19) that ensure a good lateral seating of the printer.

5. The briefcase according to claim 4, in which the possibility of fitting outlets for power and connection to the system onto the lateral edges (19) to the printer is provided.

6. The briefcase according to claim 5, comprising a space reduced to the minimum between the rigid internal support (1) and the external part of the briefcase during the opening of the latter.

7. The briefcase according to claim 6, comprising a rigid support (1) formed by a base fixed on ¾ of its length thanks to two hooks (19) while the shelf (7) is held with Velcro fasteners.

8. The briefcase according to claim 7, comprising an empty space integrated under the mobile plane (21) on which is fixed a cross support terminating at its extremities in an arc of a circle, allowing the printer (24) to be placed either in a stopped position to the horizontal, or in an operating position to the vertical, the two alternatives giving in all cases a stable position to said printer (24).

9. The briefcase according to claim 8, equipped with a storage space (25) protected by a grille at the front (26) space (25) accessible by sliding the portable computer toward the back.
